# EUROPEAN PATENT APPLICATION

(11) **EP 4 502 799 A1**
(43) Date of publication of application: **05.02.2025**
(21) Application number: 24165963.0
(22) Date of filing: 25.03.2024
(51) Int. Cl.: G06F 9/48, G06N 3/063, G06N 3/045, G06N 3/0464

(54) **TASK PREEMPTION IN A DEEP LEARNING ACCELERATOR SYSTEM**

(30) Priority: 03.08.2023 US 202318364742
(71) Applicant: MediaTek Inc., 30078 Hsinchu City (TW)
(72) Inventor: OU, Shi-Yi, Hsinchu City, Taiwan (TW); CHANG, Tun-Yi, Hsinchu City, Taiwan (TW); ANDRIAN, Henrry, Hsinchu City, Taiwan (TW); HSU, Jeng-Yun, Hsinchu City, Taiwan (TW)
(74) Representative: Pfenning, Meinig & Partner mbB

(57) **Abstract**

Deep learning accelerator (DLA) hardware performs task preemption. The DLA hardware executes a first task by using a neural network of multiple layers on a given input. In response to a stop command from a DLA driver to stop execution of the first task, the DLA hardware completes a current operation of the neural network and sending an interrupt request (IRQ) to the DLA driver. The DLA hardware then receives a second task from the DLA driver. The DLA hardware executes the second task to completion before resuming the execution of the first task.

## Description

### TECHNICAL FIELD

Embodiments of the invention relate to a deep learning accelerator; more specifically, to task preemption schemes used in a system having a deep learning accelerator.

### BACKGROUND OF THE INVENTION

Task preemption is a mechanism that allows hardware to suspend a currently executing task and switch to the execution of another task. Thus, task preemption enables time-sharing of the same hardware by two or more tasks. For deep learning hardware, there is a growing need for sharing the same deep learning accelerator (DLA) among multiple deep learning tasks.

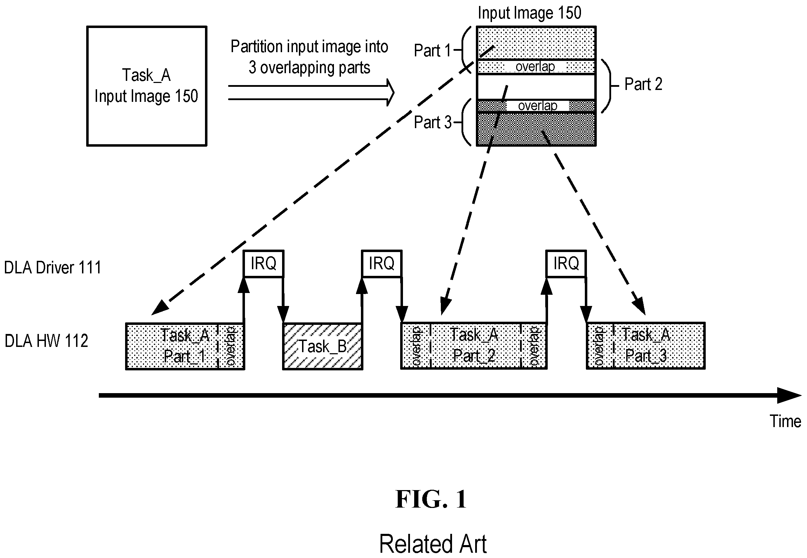

Figure 1 illustrates a conventional preemption scheme according to an example. DLA hardware ("DLA HW 112") performs a normal task (e.g., Task_A) by executing a neural network on an input image 150. Input image 150 is partitioned manually into multiple (e.g., 3) overlapping parts. When DLA HW 112 completes each part, it sends an interrupt request (IRQ) to a DLA driver 111 and waits for instruction from DLA driver 111. The IRQ provides a preemption opportunity for an urgent task. In this example, an urgent task (e.g., Task_B) can preempt the execution of Task_A at the end of Part_1 and at the end of Part_2. Each of these preemption opportunities is called a breakpoint. The breakpoints in this example are manually created by a programmer. The programmer also determines the size of the overlapping regions in input image 150 to prevent quality degradation in the Task_A output. These overlapping regions increase the overhead in the computation workload. The more breakpoints there are, the higher the overhead.

The conventional preemption scheme as described above is highly inefficient. Thus, there is a need for improving the task preemption mechanism in a DLA system.

### SUMMARY OF THE INVENTION

In one embodiment, a method is performed by deep learning accelerator (DLA) hardware for task preemption. The method includes the step of executing a first task by using a neural network of multiple layers on a given input. In response to a stop command from a DLA driver to stop execution of the first task, the method further includes the steps of completing a current operation of the neural network and sending an interrupt request (IRQ) to the DLA driver. The method further includes the steps of receiving a second task from the DLA driver, and executing the second task to completion before resuming the execution of the first task.

In another embodiment, a method is performed by DLA hardware for task preemption. The method includes the step of executing a first task by using a neural network of multiple layers on a given input. The first task has been modified by a DLA driver to include a breakpoint at an end of each layer of the neural network. The method further includes the step of sending an IRQ to the DLA driver when execution of the first task reaches the breakpoint of a given layer of the neural network. The method further includes the steps of receiving a second task from the DLA driver in response to the IRQ, and executing the second task to completion before resuming execution of the first task.

In yet another embodiment, a system is operative to perform task preemption. The system includes DLA hardware, a host processor to execute a DLA driver, and a memory to store the DLA driver. The DLA hardware is operative to execute a first task by using a neural network of multiple layers on a given input. In response to a stop command from the DLA driver to stop execution of the first task, the DLA hardware completes a current operation of the neural network and send an IRQ to the DLA driver. The DLA hardware further receives a second task from the DLA driver, and executes the second task to completion before resuming the execution of the first task.

Other aspects and features will become apparent to those ordinarily skilled in the art upon review of the following description of specific embodiments in conjunction with the accompanying figures.

### BRIEF DESCRIPTION OF DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.
Figure 1 illustrates a conventional preemption scheme according to an example.
Figure 2 is a timing diagram illustrating a fixed preemption scheme according to one embodiment.
Figure 3 is a flow diagram illustrating a method performed by a DLA driver according to the embodiment of Figure 2.
Figure 4 is a timing diagram illustrating a coarse-grained dynamic preemption scheme according to one embodiment.
Figure 5 is a flow diagram illustrating a method performed by a DLA driver according to the embodiment of Figure 4.
Figure 6 is a timing diagram illustrating a fine-grained dynamic preemption scheme according to one embodiment.
Figure 7 is a flow diagram illustrating a method performed by a DLA driver according to the embodiment of Figure 6.
Figure 8 is a block diagram illustrating a computing system according to one embodiment.
Figure 9 is a flow diagram illustrating a method performed by DLA hardware for task preemption according to one embodiment.
Figure 10 is a flow diagram illustrating a method performed by DLA hardware for task preemption according to another embodiment.
Figure 11 illustrates an example of a neural network layer that includes multiple sublayers according to one embodiment.

### DETAILED DESCRIPTION OF THE INVENTION

In the following description, numerous specific details are set forth. However, it is understood that embodiments of the invention may be practiced without these specific details. In other instances, well-known circuits, structures, and techniques have not been shown in detail in order not to obscure the understanding of this description. It will be appreciated, however, by one skilled in the art, that the invention may be practiced without such specific details. Those of ordinary skill in the art, with the included descriptions, will be able to implement appropriate functionality without undue experimentation.

Embodiments of the invention provide a system, apparatus, and method to support deep learning accelerator (DLA) task preemption. The system includes DLA hardware to perform deep learning computations such as neural network computations. The system also includes a DLA driver that enables a high-priority task to preempt a low-priority task for execution on the DLA hardware. The high-priority task, also referred to as an urgent task, may have a frame per second (FPS) requirement to be fulfilled by the system. The DLA driver allows the urgent task to preempt the low-priority task at the completion of a neural network operation, which corresponds to the end of a neural network layer or sublayer. The DLA hardware executes the urgent task to completion, and then resumes the execution of the low-priority task.

The neural network described herein is a multi-layer neural network. Each network layer is also referred to as an operation layer ("OP layer") or layer. A DLA driver issues multiple subcommands to the DLA hardware to execute the multiple layers of the neural network, where each layer corresponds to one subcommand. One or more of the layers may include multiple sublayers, where each sublayer corresponds to a neural network operation.

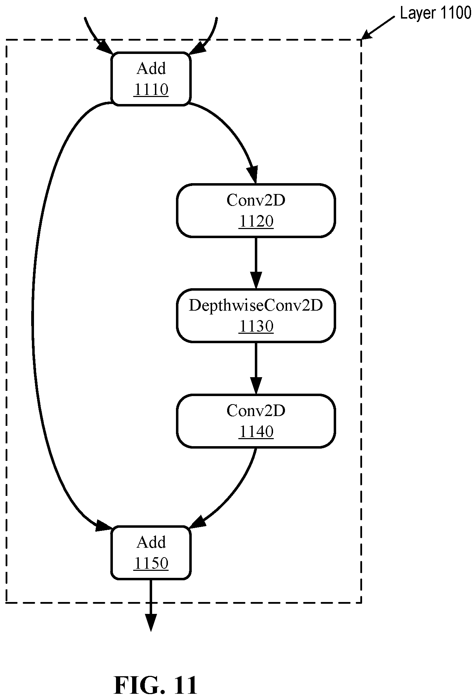

In some embodiments, a neural network can be described by a directed acyclic graph (DAG), which can be partitioned into multiple subgraphs. Each subgraph includes one or more nodes. Each subgraph corresponds to a layer (also referred to as a network layer) and each node corresponds to a sublayer. Each subgraph is compiled into a subcommand for the DLA hardware to execute. The DLA hardware executes a subcommand by performing one or more neural network operations, where each neural network operation corresponds to a sublayer. Non-limiting examples of the sublayers include convolution, pooling, concatenation, normalization, etc. For example, a layer of the neural network may include a convolution sublayer and a pooling sublayer. Figure 11 illustrates an example of a layer 1100 of a neural network according to one embodiment. Layer 1100 includes three sublayers, Conv2D 1120, DepthwiseConv2D 1130, and Conv2D 1140, which are connected in series to perform convolution operations. Layer 1100 includes an add 1110 at the input end and an add 1150 at the output end. It is understood that a layer may include any number of sublayers not limited to the example shown in Figure 11.

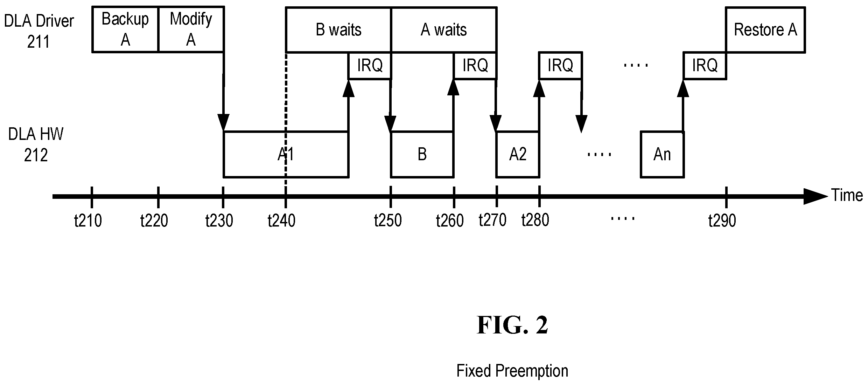

Three preemption schemes are described in this disclosure: fixed preemption, coarse-grained dynamic preemption, and fine-grained dynamic preemption. Referring to Figures 2-7, the preemptions schemes are explained using two DLA tasks (e.g., Task_A and Task_B) as examples. For simplicity of illustration, Task_A is shown in the following figures as "A" and Task_B is shown as "B". Task_B is an urgent task; e.g., a task subject to a higher FPS requirement than Task_A or a task having a higher priority than Task_A. Task_A and Task_B are to be executed on the same DLA hardware, which is shown in the following figures as "HW". The DLA hardware performs Task_A by executing a multi-layer neural network on a given input. Task_A in the following figures is shown as a concatenation of A1, A2, ...., An, where *n* is the number of layers in the neural network.

Figure 2 is a timing diagram illustrating a fixed preemption scheme according to one embodiment. According to the fixed preemption scheme, a DLA driver 211 (also referred to as "driver 211") modifies Task_A by inserting a breakpoint at the end of every network layer. In one embodiment, driver 211 may insert an interrupt bit at the end of every network layer to indicate a breakpoint. Initially, driver 211 issues a command to DLA hardware 212 (also referred to as "HW 212") to execute the modified Task_A. When HW 212 encounters a breakpoint in the modified Task_A, it sends an interrupt request (IRQ) to driver 211 and suspends the execution of Task_A. The breakpoint allows a waiting urgent task (e.g., Task_B) to preempt Task_A from DLA execution. According to the fixed preemption scheme, HW 212 sends an IRQ to driver 211 at the end of every network layer, regardless of whether there is an urgent task waiting to be executed.

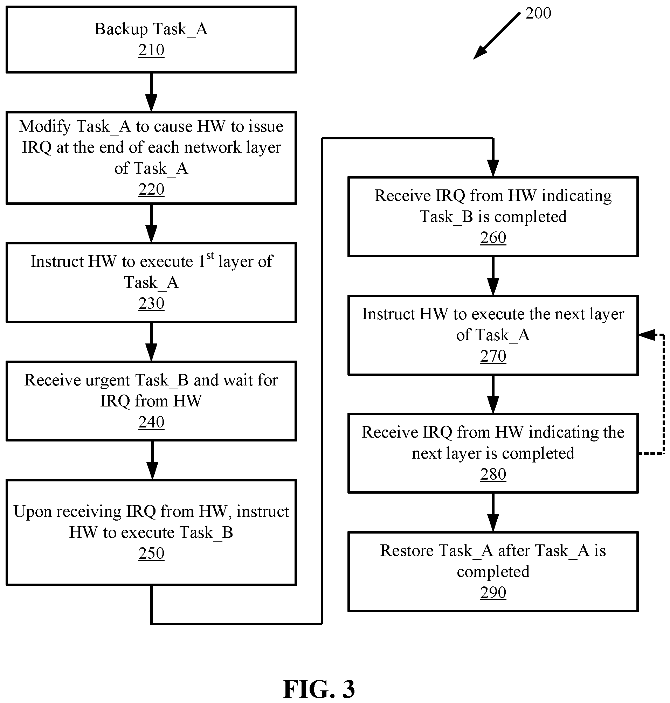

Figure 3 is a flow diagram illustrating a method 200 performed by DLA driver 211 according to the embodiment of Figure 2. Each step of method 200 is denoted by a number *k* corresponding to a time instant *tk* in Figure 2. For example, step 210 (Figure 3) corresponds to t210 (Figure 2), step 220 (Figure 3) corresponds to t220 (Figure 2), and the like.

Referring to Figures 2 and 3, initially, driver 211 receives Task_A for execution on HW 212 and prepares Task_A for preemption. Driver 211 at step 210 (t210) backs up Task_A and at step 220 (t220) modifies Task_A. Driver 211 modifies Task_A by inserting a breakpoint at the end of each network layer. The breakpoint causes HW 212 to send an IRQ to driver 211 and wait for the driver's instruction. At step 230 (t230), driver 211 instructs HW 212 to execute the first layer of Task_A. During the execution of the first layer of Task_A, driver 211 at step 240 (t240) receives an urgent Task_B and places Task_B in a queue, waiting for an IRQ from HW 212. Upon receiving the IRQ from HW 212, driver 211 at step 250 (t250) instructs HW 212 to execute Task_B. Driver 211 may save the context of Task_A at this point. At step 260 (t260), driver 211 receives an IRQ from HW 212 indicating Task_B is completed. At step 270 (t270), driver 211 instructs HW 212 to execute the next layer of Task_A, and at step 280 (t280), driver 211 receives an IRQ from HW 212 indicating the next layer is completed. Steps 270 and 280 may be repeated for the rest of the layers in the neural network of Task_A. After all of the layers of Task_A are executed, driver 211 restores Task_A at step 290 (t290). The restoration removes the inserted breakpoints from the modified Task_A.

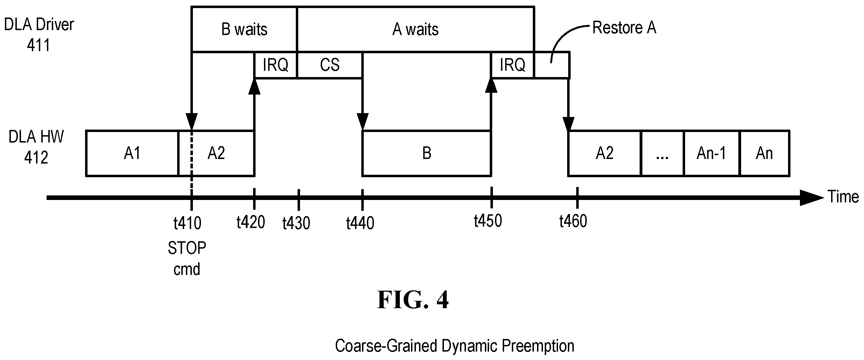

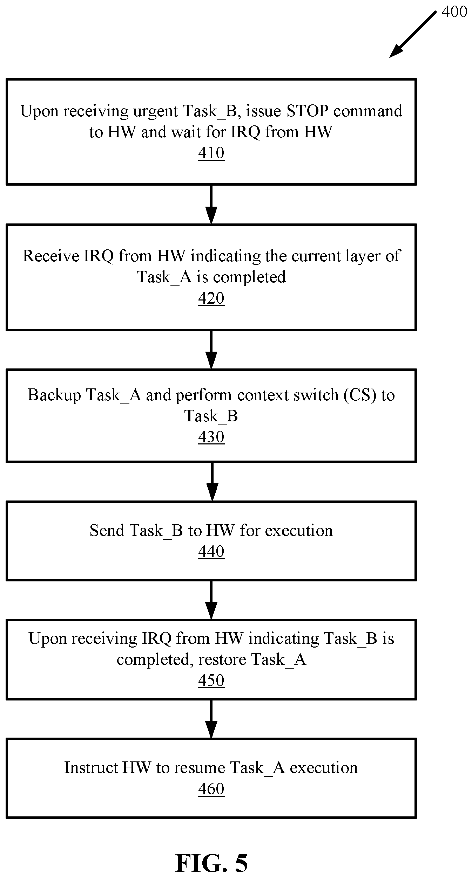

Figure 4 is a timing diagram illustrating a coarse-grained dynamic preemption scheme according to one embodiment. Figure 5 is a flow diagram illustrating a method 400 performed by a DLA driver 411 ("driver 411") according to the embodiment of Figure 4. Initially, driver 411 issues a command to DLA hardware 412 (also referred to as "HW 412") to execute Task_A.

According to the coarse-grain dynamic scheme, driver 411 issues a STOP command to HW 412 when receiving an urgent task Task_B. To issue the STOP command, driver 411 may set a predetermined value in a register. The predetermined register value notifies HW 412 of the pending stop execution of the first task. HW 412 continues the execution of a current layer of Task_A until the end of the current layer, at which point HW 412 sends an IRQ to driver 411 to allow Task_B to preempt Task_A. When there is no urgent task waiting to be executed on HW 412, driver 411 does not issue a STOP command and HW 412 does not send an IRQ. Thus, when there is no urgent task waiting, Task_A can be executed without repeated interruptions by IRQs. Driver 411 does not insert breakpoints to Task_A prior to Task_A's execution.

The following descriptions refer to Figures 4 and 5. Similar to the notations in Figures 2 and 3, each step of method 400 is denoted by a number *k* corresponding to a time instant *tk* in Figure 4.

Initially, driver 411 instructs HW 412 to execute Task_A. HW 412 executes the first layer (A1) and then the second layer (A2) of Task_A. During the execution of the second layer, driver 411 at step 410 (t410) receives an urgent Task_B and issues a STOP command to HW 412. Driver 411 then waits for an IRQ from HW 412. HW 412 continues the execution of the second layer of Task_A until the second layer is completed. At this point, HW 412 sends an IRQ to driver 411 and waits for the driver's instruction. At step 420 (t420), driver 411 receives the IRQ from HW 412 indicating the current layer of Task_A is completed. At step 430 (t430), driver 411 backs up the context of Task_A and performs a context switch (CS) to Task_B. At step 440 (t440), driver 411 sends Task_B to HW 412 for execution. At step 450 (t450), upon receiving an IRQ from HW 412 indicating Task_B is completed, driver 411 restores the saved context of Task_A. At step 460 (t460), driver 411 instructs HW 412 to resume Task_A execution. HW 412 resumes execution according to the saved context of Task_A.

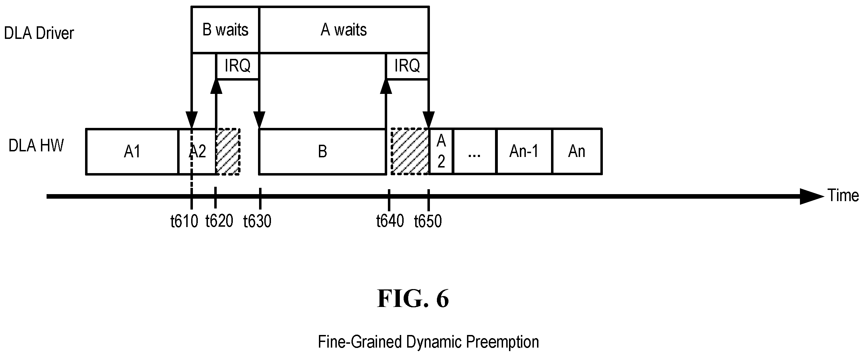

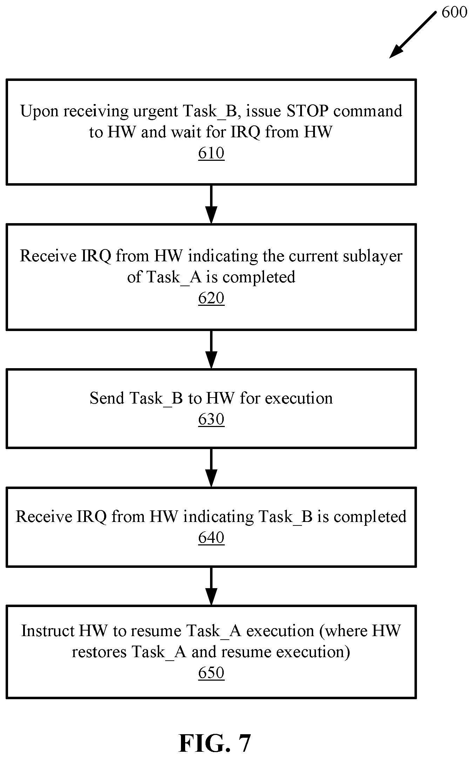

Figure 6 is a timing diagram illustrating a fine-grained dynamic preemption scheme according to one embodiment. Figure 7 is a flow diagram illustrating a method 600 performed by a DLA driver 611 ("driver 611") according to the embodiment of Figure 6. Initially, driver 611 issues a command to DLA hardware 612 (also referred to as "HW 612") to execute Task_A.

According to the fine-grain dynamic scheme, driver 611 issues a STOP command to HW 612 when receiving an urgent task Task_B. To issue the STOP command, driver 611 may set a predetermined value in a register. The predetermined register value notifies HW 612 of the pending stop execution of the first task. HW 612 continues the execution of a current sublayer of Task_A until the end of the sublayer, at which point HW 612 sends an IRQ to driver 611 to allow Task_B to preempt Task_A. Similar to the coarse-grained dynamic scheme, driver 611 does not insert breakpoints to Task_A prior to Task_A's execution. Thus, when there is no urgent task waiting, Task_A can be executed without repeated interruptions by IRQs. When driver 611 receives an urgent task for HW execution, the wait time for the urgent task is shorter than that of the coarse-grained dynamic scheme because HW 612 can send an IRQ when completing a sublayer instead of a layer. A neural network layer may include multiple sublayers. Moreover, HW 612 (instead of driver 611) may save the states of Task_A during the execution of Task_A and retrieve the saved states when resuming the Task_A execution. It is more efficient for HW 612 to save Task_A's states than for driver 611 to perform context switching when Task_A is preempted.

The following descriptions refer to Figures 6 and 7. Similar to the notations in Figures 2 and 3, each step of method 600 is denoted by a number *k* corresponding to a time instant *tk* in Figure 6.

Initially, driver 611 instructs HW 612 to execute Task_A. HW 612 executes the first layer (A1) and then the second layer (A2) of Task_A. During the execution of the second layer, driver 611 at step 610 (t610) receives an urgent Task_B and issues a STOP command to HW 612. Driver 611 then waits for an IRQ from HW 612. HW 612 continues the execution of Task_A until the current sublayer in the second layer is completed. At this point, HW 612 sends an IRQ to driver 611 and waits for the driver's instruction. At step 620 (t620), driver 611 receives the IRQ from HW 612 indicating the current sublayer of Task_A is completed. At step 630 (t630), driver 612 sends Task_B to HW 612 for execution. At step 640 (t640), driver 611 receives an IRQ from HW 612 indicating Task_B is completed. In response to the IRQ, driver 611 at step 650 (t650) instructs HW 612 to resume the execution of Task_A. HW 612 restores the backed up Task_A and resumes execution.

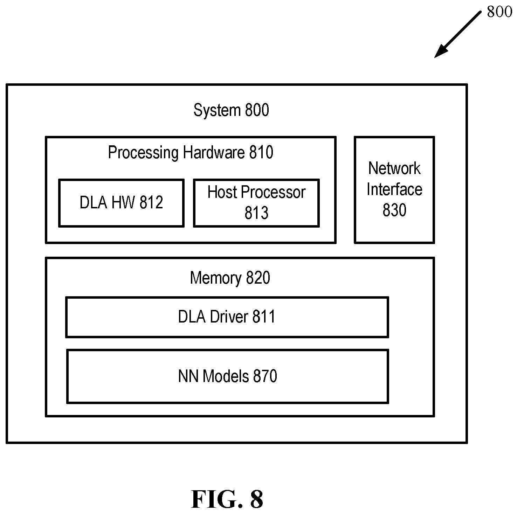

Figure 8 is a block diagram illustrating a computing system 800 ("system 800") according to one embodiment. System 800 includes processing hardware 810, which further includes at least a host processor 813 and DLA hardware 812. Non-limiting examples of host processor 812 include a central processing unit (CPU), a microcontroller, or another type of processor on which a DLA driver 811 can be executed. System 800 further includes a memory 820 such as a static random access memory (SRAM) device, a dynamic random access memory (DRAM) device, a flash memory device, and/or other volatile or non-volatile memory devices. System 800 may further include a network interface 830, which may be a wired interface and/or a wireless interface. It is understood that system 800 is simplified for illustration purposes; additional hardware and software components are not shown.

Memory 820 may store one or more neural network models 870 used by DLA hardware 812 to execute deep learning tasks. Each neural network model 870 may be compiled into a set of subcommands. DLA driver 811 sends compiled subcommands to DLA hardware 812, and DLA hardware 812 performs neural network computations according to the subcommands. DLA driver 811 and DLA hardware 812 support task preemption according to one or more of the fixed preemption scheme (Figures 2 and 3), the coarse-grained dynamic preemption scheme (Figures 4 and 5), and the fine-grained dynamic preemption scheme (Figures 6 and 7). Referring to Figures 2-7, DLA hardware 812 may be an example of DLA hardware 212, 412, and/or 612, and DLA driver 811 may be an example of DLA driver 211, 411, and/or 611.

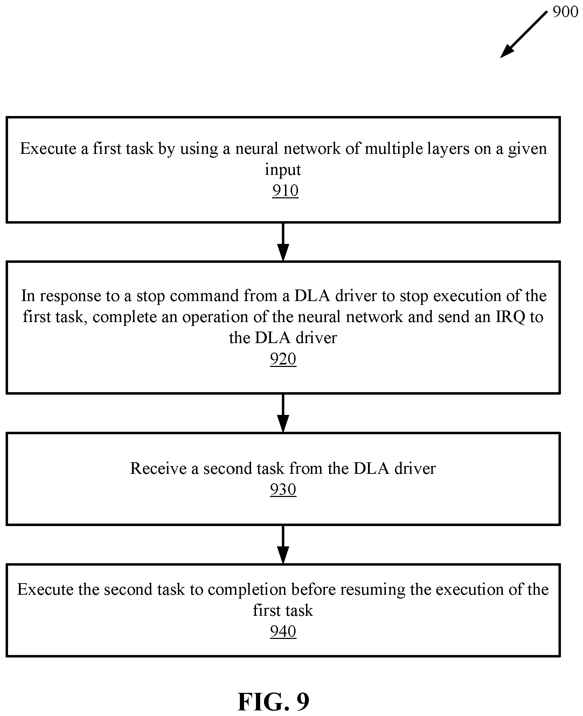

Figure 9 is a flow diagram illustrating a method 900 performed by DLA hardware for task preemption according to one embodiment. Non-limiting examples of the DLA hardware that performs method 900 may include DLA hardware 811 in Figure 8.

Method 900 starts at step 910 when the DLA hardware executes a first task by using a neural network of multiple layers on a given input. In response to a stop command from a DLA driver to stop the execution of the first task, the DLA hardware at step 920 completes an operation of the neural network and sends an IRQ to the DLA driver. The DLA hardware at step 930 receives a second task from the DLA driver. The DLA hardware at step 940 executes the second task to completion before resuming the execution of the first task.

In one embodiment, in response to the stop command, the DLA hardware completes a current layer of the neural network before sending the IRQ to the DLA driver. The DLA hardware completes the current layer of the neural network by completing the execution of a subcommand compiled from the current layer.

In another embodiment, one or more layers of the neural network are further partitioned into multiple sublayers of neural network operations. In response to the stop command from the DLA driver, the DLA hardware completes a current sublayer of the neural network before sending the IRQ to the DLA driver.

The DLA driver may perform a context switch in response to the IRQ from the DLA hardware. After completion of the second task, the DLA hardware receives a restored context of the first task from the DLA driver and resumes the execution of the first task using the restored context. Alternatively, the DLA hardware may save states of the first task during the execution of the first task, and retrieve the saved states of the first task to resume the execution of the first task.

The DLA driver may issue the stop command by setting a predetermined value in a register. By detecting the predetermined register value, the DLA hardware is notified of the stop command issued by the DLA driver. The first task and the second task are executed according to respective neural networks, and wherein the second task has a higher FPS requirement than the first task. The respective neural networks may be the same neural network or different neural networks.

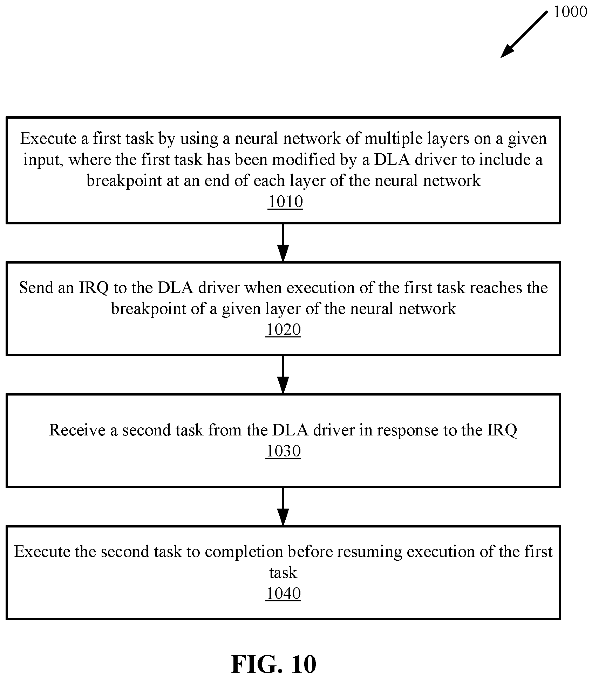

Figure 10 is a flow diagram illustrating a method 1000 performed by DLA hardware for task preemption according to another embodiment. Non-limiting examples of the DLA hardware that performs method 1000 may include DLA hardware 811 in Figure 8.

Method 1000 starts at step 1010 when the DLA hardware executes a first task by using a neural network of multiple layers on a given input. The first task has been modified by a DLA driver to include a breakpoint at an end of each layer of the neural network. The DLA hardware at step 1020 sends an IRQ to the DLA driver when the execution of the first task reaches the breakpoint of a given layer of the neural network. The DLA hardware at step 1030 receives a second task from the DLA driver in response to the IRQ. The DLA hardware at step 1040 executes the second task to completion before resuming the execution of the first task.

In one embodiment, the DLA hardware sends a corresponding IRQ to the DLA driver when the execution of the first task reaches the breakpoint of each layer of the neural network, and waits for an instruction from the DLA driver to proceed with the execution. In one embodiment, the DLA driver backs up the first task before modifying the first task, and restores the first task after the DLA hardware completes the execution of the first task. The DLA driver may insert an interrupt bit at the end of each neural network layer to indicate a breakpoint.

A number of preemption schemes have been disclosed with respect to neural network computing. The following description provides performance comparisons of the schemes. It should be understood that the comparisons use assumptions that simplify neural network structures and the time spent on the various operations in connection with the task execution.

Suppose that there are *n* network layers in the first task and one preemption by an urgent task (e.g., the aforementioned second task). Also, suppose that the DLA driver spends *I* seconds in handling each IRQ, and *C* seconds on context switching. The preemption overhead is *n·I* for the fixed preemption scheme; *2·I* + *C* for the coarse-grained preemption scheme, and *2I* for the fine-grained preemption scheme. The increase in the execution time for the first task is *n·I* for the fixed preemption scheme and zero for the coarse-grained and fine-grained preemption schemes. Moreover, suppose that each of the *n* network layers is partitioned into *s* sublayers, and the execution time of the first task is *T* seconds when there is no preemption. The approximate average wait time for the urgent task to be executed by the DLA hardware is *I*+*(T*+ *n·I)*/*2n* for the fixed preemption scheme; *C*+ *I*+*T*/*2n* for the coarse-grained preemption scheme, and *I*+*T*/*(2n·s)* for the fine-grained preemption scheme.

The DLA hardware utilization rate increases when the preemption overhead decreases. From the above comparisons, it can be seen that each of the dynamic preemption schemes has a lower overhead, and hence a higher utilization rate than the fixed preemption scheme. Furthermore, a higher number of breakpoint opportunities corresponds to a lower wait time for the urgent task. The fine-grained dynamic preemption scheme provides the highest number of breakpoint opportunities; i.e., every sublayer of the neural network provides an opportunity for preemption. Thus, the wait time for an urgent task is the lowest for the fine-grained dynamic preemption scheme. Both the fixed preemption scheme and the coarse-grained dynamic preemption scheme provide breakpoint opportunities at every network layer; however, the wait time for the fixed preemption scheme is longer because the DLA driver spends more time on handling a higher number of IRQs.

Various functional components or blocks have been described herein. As will be appreciated by persons skilled in the art, the functional blocks will preferably be implemented through circuits (either dedicated circuits or general-purpose circuits, which operate under the control of one or more processors and coded instructions), which will typically comprise transistors that are configured in such a way as to control the operation of the circuity in accordance with the functions and operations described herein.

The operations of the flow diagrams of Figures 3, 5, 7, 9, and 10 have been described with reference to the exemplary embodiment of Figure 8. However, it should be understood that the operations of the flow diagrams of Figures 3, 5, 7, 9, and 10 can be performed by embodiments of the invention other than the embodiment of Figure 8, and the embodiment of Figure 8 can perform operations different than those discussed with reference to the flow diagrams. While the flow diagrams of Figures 3, 5, 7, 9, and 10 show a particular order of operations performed by certain embodiments of the invention, it should be understood that such order is exemplary (e.g., alternative embodiments may perform the operations in a different order, combine certain operations, overlap certain operations, etc.).

While the invention has been described in terms of several embodiments, those skilled in the art will recognize that the invention is not limited to the embodiments described, and can be practiced with modification and alteration within the spirit and scope of the appended claims. The description is thus to be regarded as illustrative instead of limiting.

## Claims

1. A method performed by deep learning accelerator (DLA) hardware for task preemption, comprising:
executing a first task by using a neural network of multiple layers on a given input;
in response to a stop command from a DLA driver to stop execution of the first task, completing a current operation of the neural network and sending an interrupt request (IRQ) to the DLA driver;
receiving a second task from the DLA driver; and
executing the second task to completion before resuming the execution of the first task.

2. The method of claim 1, wherein in response to the stop command, the method further comprises completing a current layer of the neural network before sending the IRQ to the DLA driver.

3. The method of claim 2, wherein the DLA hardware completes the current layer of the neural network by completing execution of a subcommand compiled from the current layer.

4. The method of any one of claims 1 to 3, wherein one or more layers of the neural network are partitioned into multiple sublayers of neural network operations, and wherein in response to the stop command, the method further comprises completing a current sublayer of the neural network before sending the IRQ to the DLA driver.

5. The method of any one of claims 1 to 4, further comprising:
detecting, by the DLA hardware, a predetermined register value that indicates the stop command issued by the DLA driver.

6. The method of any one of claims 1 to 5, further comprising:
receiving a restored context of the first task from the DLA driver; and
resuming the execution of the first task using the restored context.

7. The method of any one of claims 1 to 6, further comprising:
saving, by the DLA hardware, states of the first task during the execution of the first task; and
retrieving the saved states of the first task to resume the execution of the first task.

8. The method of any one of claims 1 to 7, wherein the first task and the second task are executed according to respective neural networks, and wherein the second task has a higher frame-per-second (FPS) requirement than the first task.

9. A method performed by deep learning accelerator (DLA) hardware for task preemption, comprising:
executing a first task by using a neural network of multiple layers on a given input,
wherein the first task has been modified by a DLA driver to include a breakpoint at an end of each layer of the neural network;
sending an interrupt request (IRQ) to the DLA driver when execution of the first task reaches the breakpoint of a given layer of the neural network;
receiving a second task from the DLA driver in response to the IRQ; and
executing the second task to completion before resuming execution of the first task.

10. The method of claim 9, further comprising:
sending a corresponding IRQ to the DLA driver when the execution of the first task reaches the breakpoint of each layer of the neural network; and
waiting for an instruction from the DLA driver to proceed with the execution;
and/or wherein the DLA driver backs up the first task before modifying the first task, and restores the first task after the DLA hardware completes the execution of the first task;
and/or wherein an interrupt bit is inserted at the end of each layer of the neural network to indicate the breakpoint.

11. A system operative to perform task preemption, comprising:
deep learning accelerator (DLA) hardware;
a host processor to execute a DLA driver; and
a memory to store the DLA driver,
wherein the DLA hardware is operative to:
execute a first task by using a neural network of multiple layers on a given input;
in response to a stop command from the DLA driver to stop execution of the first task, complete a current operation of the neural network and send an interrupt request (IRQ) to the DLA driver;
receive a second task from the DLA driver; and
execute the second task to completion before resuming the execution of the first task.

12. The system of claim 11, wherein in response to the stop command, the DLA hardware is further operative to complete a current layer of the neural network before sending the IRQ to the DLA driver.

13. The system of claim 12, wherein the DLA hardware completes the current layer of the neural network by completing execution of a subcommand compiled from the current layer.

14. The system of any one of claims 11 to 13, wherein one or more layers of the neural network are partitioned into multiple sublayers of neural network operations, and wherein in response to the stop command, the DLA hardware is further operative to complete a current sublayer of the neural network before sending the IRQ to the DLA driver.

15. The system of any one of claims 11 to 14, wherein the DLA hardware is further operative to detect a predetermined register value that indicates the stop command issued by the DLA driver;
and/or wherein the DLA hardware is further operative to receive a restored context of the first task from the DLA driver, and resume the execution of the first task using the restored context;
and/or wherein the DLA hardware is further operative to save states of the first task during the execution of the first task, and retrieve the saved states of the first task to resume the execution of the first task;
and/or wherein the first task and the second task are executed according to respective neural networks, and wherein the second task has a higher frame-per-second (FPS) requirement than the first task.
